# EUROPÄISCHE PATENTSCHRIFT

(11) **EP 2 989 237 B1**
(45) Veröffentlichungstag und Bekanntmachung des Hinweises auf die Patenterteilung: **17.03.2021**
(21) Anmeldenummer: 13725085.8
(22) Anmeldetag: 24.04.2013
(51) Int. Cl.: C25D 5/56, C25D 5/02, B29C 45/14, B29C 45/00, B29C 37/00, B29L 31/00, B60K 37/06, B60K 35/00, C25D 5/12, B60Q 1/00

(54) **VERFAHREN ZUM BESCHICHTEN VON FUNKTIONS-BAUTEILEN AUS KUNSTSTOFF**
METHOD FOR COATING FUNCTIONAL COMPONENTS MADE OF PLASTICS MATERIAL
PROCÉDÉ PERMETTANT DE REVÊTIR DES ÉLÉMENTS FONCTIONNELS EN MATIÈRE PLASTIQUE

(43) Veröffentlichungstag der Anmeldung: 02.03.2016
(73) Patentinhaber: Automobile Patentverwaltungs- und Verwertungs- gesellschaft mbH, 58511 Lüdenscheid (DE)
(72) Erfinder: KIESLICH, Dirk, 58840 Plettenberg (DE)
(74) Vertreter: Patentanwälte Dörner & Kötter PartG mbB
(86) Internationale Anmeldenummer: PCT/EP2013/058536
(87) Internationale Veröffentlichungsnummer: WO 2014/173445

(56) Entgegenhaltungen:
- DE-A1-102006 042 269
- DE-A1-102010 053 165
- US-A- 3 743 458
- US-A1- 2004 211 656
- US-A1- 2007 184 148

## Beschreibung

Die Erfindung betrifft ein Verfahren zum Beschichten von Bauteilen mit einer durchleuchtfähigen Symbolik oder dergleichen aufweisenden Funktions-Bauteilen-aus Kunststoff, bei dem das Bauteil aus einem galvanisierbaren Kunststoff im Spritzgießverfahren hergestellt wird, und anschließend galvanisiert wird, wobei die beschichteten Bereiche der Bauteile galvanikfrei bleiben.

Bei den Funktionsbauteilen aus Kunststoff der hier betrachteten Art, beispielsweise für die Automobilindustrie, handelt es sich im Wesentlichen um Bedienelemente, mit denen verschiedene Funktionen des Fahrzeugs angezeigt und bedient werden können. Hierunter fallen beispielsweise Start/Stopp-Knöpfe, Bedienelemente für die Fahrzeugbeleuchtung, Klimaregulierung, Schiebedächer, Cabrioverdecke oder Innenraumbeleuchtung. Den genannten Bauteilen ist gemeinsam, dass sie eine Symbolik oder Wörter oder dergleichen aufweisen, die die jeweilige Funktion beschreiben. Diese Symbolik ist zur besseren Sichtbarkeit in Kontrastfarbe, also andersfarbig als das übrige Bedienelement ausgebildet. Anforderungen an die Symbolik sind beispielsweise die Kontrastschärfe im Vergleich zum Bedienelement selbst sowie die Hinterleuchtbarkeit.

Zur Erstellung der vorgenannten Funktions-Bauteile aus Kunststoff mit metallischer Beschichtung sind verschiedene Verfahren bekannt. So basiert beispielsweise das PVD-Verfahren (Physical-Vapor-Deposition) auf der Metallisierung eines aus einem Kunststoff gefertigten Bedienelementes. Hierbei werden dünne Schichten in einem Vakuum abgeschieden. Das abzuscheidende Material liegt in fester Form vor. Das verdampfte Material bewegt sich durch die Vakuumkammer und trifft auf die zu beschichtenden Bauteile, wo es zur Schichtbildung kommt. Nachteilig ist dabei die anschließende Bearbeitung mit Lasern zur Darstellung der Symbolik. Zwar ist das PVD-Verfahren geeignet, die gewünschte Symbolik auf die Bauteile aufzubringen.

Als problematisch hat sich jedoch erwiesen, dass die Metallschicht nicht ohne eine zusätzliche Schutzschicht eine hinreichende Festigkeit gegen Abrieb und Korrosion aufweist. Aus diesem Grund ist es erforderlich, eine Schutzschicht, beispielsweise aus Lack, aufzubringen, um beispielsweise die in der Automobilindustrie hohen Anforderungen in Bezug auf Haftung und Beständigkeit der Beschichtung zu erreichen. Durch diesen zusätzlichen Arbeitsgang sind jedoch die Kosten erhöht.

Darüber hinaus sind Verfahren bekannt, bei denen die Bauteile galvanisch beschichtet werden. Dabei werden die Teile zunächst im Spritzgießverfahren, beispielsweise aus ABS bzw. ABS/PC, hergestellt. Nach dem Spritzgieß-Vorgang werden die Bauteile galvanisch vorbehandelt, um eine dünne Metallschicht zu erzeugen. Die Bauteile werden dann dem Galvanisier-Vorgang entnommen. Nach der Entnahme wird die galvanisierte Metallschicht bereichsweise mittels Laser entfernt. Die so behandelten Bauteile werden dann erneut dem Galvanisier-Vorgang zugeführt und der Galvanisierprozess fortgesetzt, bis die gewünschte Chromschicht gebildet ist. Die gelaserten Bereiche bilden dann die Symbolik aus. Zwar ist es mit den genannten Verfahren möglich, technisch und optisch qualitativ hochwertige Bedienelemente herzustellen. Das Verfahren weist jedoch den Nachteil auf, dass zum Einen der zusätzliche Arbeitsgang des Laserns zur Erstellung der Symbolik die Kosten erhöht. Zudem sind bei dem vorgenannten Verfahren zwei Galvanisier-Prozesse erforderlich. Insgesamt ist aufgrund der gegebenen Verfahrensabläufe das genannte Verfahren für Massenbauteile wenig geeignet.

Aus der DE 10 2010 053 165 A1 ist zudem ein Verfahren zur Herstellung beleuchtbarer oder durchleuchtbarer metallisierter, insbesondere galvanisierter Kunststoffbauteile mit haptischen und optischen Unterbrechungsstrukturen bekannt, bei dem auf einem galvanisierfähigen Kunststoffbauteil Inselnstrukturen aus galvanostabilem Lack aufgebracht werden und die anschließende Galvanisierung der Bauteile an den unbeschichteten Bereichen erfolgt. Aus der US 3 743 458 A ist ein Verfahren zum Verzieren oder Beschriften Kunststoffteilen bekannt, bei dem eine Endlosfolie mittels Transportvorrichtung bei geöffnetem Spritzgießwerkzeug getaktet an der gewünschten Stelle über der Matrize positioniert wird. Ein ähnliches Verfahren ist aus der US 2007/0184148 A1 bekannt, bei dem zusätzlich eine Kühleinrichtung vorgesehen ist, um das Aushärten des Kunststoffs zu ermöglichen.

Vor diesem Hintergrund liegt der Erfindung die Aufgabe zugrunde, ein Verfahren zum Beschichten von eine Symbolik oder dergleichen aufweisenden Funktions-Bauteilen aus Kunststoff für die Automobilindustrie durch Galvanisierung zu schaffen, welches einerseits kostengünstig und auch für die Herstellung von Massenprodukten geeignet ist, andererseits auch ohne zusätzliche Behandlung die erforderliche Abriebfestigkeit der Metallschicht der jeweiligen Bedienelemente bereitstellt. Gemäß der Erfindung wird diese Aufgabe mit den Merkmalen des Patentanspruchs 1 gelöst.

Mit der Erfindung ist ein Verfahren zum Beschichten von eine Symbolik oder dergleichen aufweisenden Funktions-Bauteilen aus Kunststoff vorzugsweise für die Automobilindustrie durch Galvanisierung geschaffen, welches im Vergleich zu den aus dem Stand der Technik bekannten Verfahren wesentlich kostengünstiger ist. Dies ist dadurch hervorgerufen, dass lediglich ein Galvanisier-Prozess erforderlich ist und somit bereits der konstruktive Aufwand der Fertigungslinie im Vergleich zu den bekannten Verfahren reduziert ist. In dem Galvanikprozess werden dabei nur die unbeschichteten Bereiche galvanisiert, während die Bereiche der übertragenden Bedruckung galvanikfrei bleiben. Außerdem ist die Unterbrechung des Galvanisierungs-Prozesses für das aus dem Stand der Technik bekannte Lasern der Bauteile nicht erforderlich, so dass die Galvanisierung in einem einzigen kontinuierlichen Vorgang vorgenommen werden kann. Hinzu kommt, dass mit dem erfindungsgemäßen Verfahren qualitativ hochwertige und auch den Anforderungen, beispielsweise gegen Abrieb, entsprechende Bauteile herstellbar sind.

Dabei wird die Symbolik aus nicht galvanisierbarem und galvanostabilem Lack aufgebracht. Die Verwendung von Lacken hat zum Vorteil, dass verschiedenste Lacke mit unterschiedlichen Eigenschaften zur Verarbeitung bereitstehen, andererseits mit den Lacken jegliche Formen für Symbole, Worte oder Zahlen abgebildet werden können.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Funktions-Bauteils aus Kunststoff in Form eines Start/Stopp-Knopfes;
- Figur 2: das Ablaufdiagramm eines erfindungsgemäßen Verfahrens;
- Figur 3: das Ablaufdiagramm eines erfindungsgemäßen Verfahrens in anderer Ausführung.

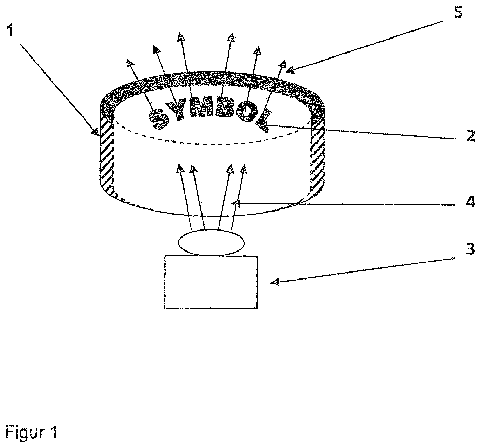

Das Verfahren nach der Erfindung dient zum Beschichten von Funktions-Bauteilen 1 aus Kunststoff durch Galvanisierung, beispielsweise für die Automobilindustrie. Die Funktionsbauteile 1 weisen nach Abschluss des Verfahrens eine Symbolik 2 auf, bei der es sich sowohl um Piktogramme, Zahlen, Wörter oder dergleichen handeln kann. Im Ausführungsbeispiel nach Figur 1 handelt es sich um einen Start/- Stopp-Knopf für ein Automobil, mit dem der Motor des Automobils gestartet und abgestellt werden kann. Die Symbolik 2 besteht in diesem Fall aus dem Wort "Symbol". Soweit es sich um andere Bedienelemente handelt, ist in der Regel die Symbolik in Form eines Piktogramms gebildet, beispielsweise die Darstellung eines Scheinwerfers, soweit es sich um ein Bedienelement für die Fahrzeugbeleuchtung handelt. Aber auch Temperaturangaben, Vorgangsangaben o. dgl. sind möglich. Das Bauteil hat im Ausführungsbeispiel einen metallischen Multi-Layer-Aufbau.

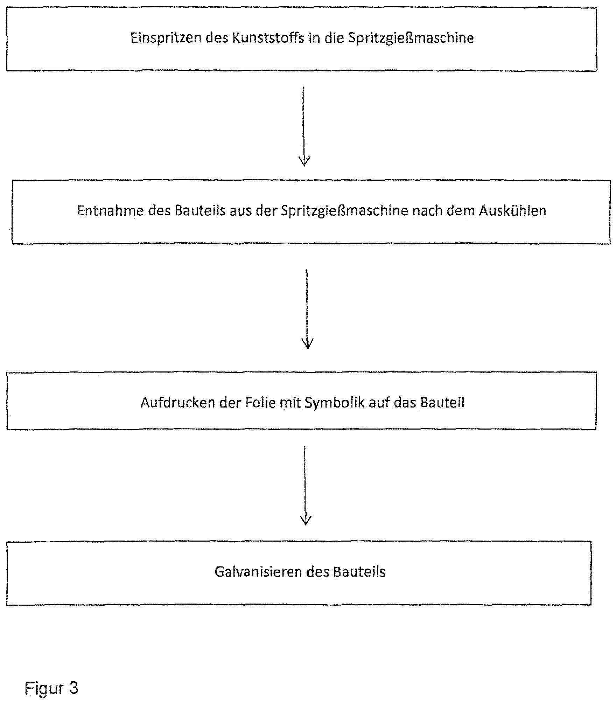

Bei dem Verfahren wird im Ausführungsbeispiel nach Figur 3 zunächst das aus Kunststoff herzustellende Funktions-Bauteil im Spritzgießverfahren hergestellt. Bei dem Kunststoff handelt es sich um einen galvanisierbaren Kunststoff, vorzugsweise um ABS oder ABS/PC. Es wird dann auf das Bauteil 1 eine die Symbolik 2 aufweisende Folie aufgebracht. Die Symbolik ist dabei aus nicht-galvanisierbarem Material gebildet. Vorzugsweise wird die Symbolik aus nicht-galvanisierbarem Lack aufgebracht. Dabei kann es sich um PET, PA, COC, PS, POM oder Polyolefine handeln.

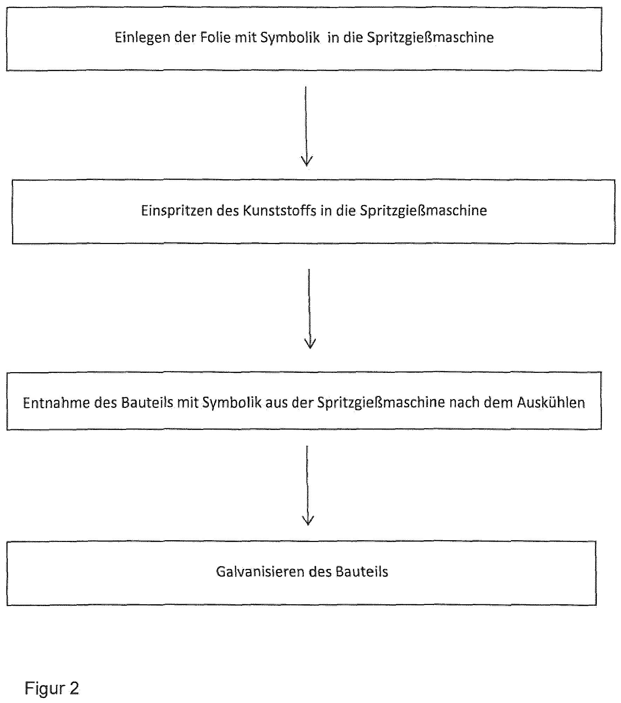

Im Ausführungsbeispiel nach Figur 2 wird die Symbolik während des Spritzgießvorgangs des Bauteils 1 aufgebracht. Hierzu findet erfindungsgemäß das In-Mould-Decoration-Verfahren Anwendung. Dabei wird die Folie mit der darauf befindlichen Symbolik durch die Spritzgießmaschine durchgezogen. Bei der Folie handelt es sich um eine aufgerollte Endlosfolie, die zum Takt der Spritzgießmaschine synchronisiert schrittweise in die Spritzgießform eingezogen wird. Das Aufbringen der Symbolik auf die Endlosfolie erfolgt beispielsweise durch Aufdrucken, vorzugsweise durch Tiefdruck. Hat die Folie mit der Symbolik ihre vorbestimmte Position eingenommen, wird die Spritzgießform geschlossen. Im Anschluss wird der Kunststoff in die Spritzgießform in bekannter Weise eingespritzt. Da sich die Folie bereits in der Spritzgießform befindet, tritt sie unmittelbar in Kontakt mit dem eingespritzten Kunststoff. Die Aufbringung der Symbolik mit Hilfe der Folie während des Spritzgießvorgangs bietet verfahrenstechnisch den Vorteil, dass auf eine separate Bearbeitungsstation für diesen Arbeitsschritt verzichtet werden kann. Die Verarbeitung der Folie während des Spritzgießvorgangs führt bei der Ausbildung der Folie beispielsweise nach Art einer Heißprägefolie dazu, dass sich die die Symbolik darstellende Lage aufgrund der hohen Temperaturen noch während des Spritzgießvorgangs von der Folie ablöst und die Symbolik an dem Bauteil anhaftet. Nach dem Auskühlen des Bauteils ist die Symbolik auf dem Bauteil erhaben, da sich die die Symbolik darstellende Lage dort ablegt und dort anhaftet. Die Dicke der aufgetragenen Schicht der Symbolik beträgt dabei zwischen 1 µm und 15 µm. Unterstützt wird der Haftmechnanismus des übertragenden Druckes im Ausführungsbeispiel von der Folie auf das Bauteil durch ein Primer System, welches durch das aufgespritzte Kunststoffmaterial aktiviert wird und für dauerhafte Haftung sorgt.

Nach Ablauf der Abkühlzeit des Bauteils wird die Spritzgießvorrichtung geöffnet und das Bauteil mit der die Symbolik nachbildenden nicht galvanisierbaren Schicht entnommen. Beim Öffnen der Spritzgießvorrichtung löst sich die Folie von dem Bauteil, während die Symbolik dem Bauteil anhaftet. Die Folie wird dann um einen Schritt weiter abgerollt, so dass der beim Spritzgießvorgang von der Symbolik befreite Bereich der Folie die Spritzgießform verlässt. Die Folie wird dabei so weit abgerollt, bis die folgende Symbolik ihre vorbestimmte Position eingenommen hat.

Das der Spritzgießform entnommene Bauteil kann im Anschluss beispielsweise auf der zu galvanisierenden Seite durch Beizen aufgeraut werden, um eine verbesserte Anhaftung der Materialien bei der Galvanisierung zu ermöglichen. Sodann wird das Bauteil galvanisiert. Dies erfolgt durch Metallisieren der Oberfläche der galvanisierbaren Seite. Die Galvanisierung erfolgt in bekannter Weise durch elektrochemisches Abscheiden mehrerer Metallschichten bis zu der Dekorschicht aus Chrom. Diese Chromschicht haftet an den Bauteilen aus galvanisierbarem Kunststoff, insbesondere ABS bzw. ABS/PC, problemlos. Lediglich die mit der Symbolik versehenen Bereiche sind nicht mit Chrom beschichtet, so dass aufgrund des andersfarbigen Untergrunds des Bauteils die Symbolik erkennbar ist. Es besteht zudem die Möglichkeit, auch ein hinterleuchtetes Bauteil auf diese Weise herzustellen, indem ein transluszenter Kunststoff für das Bauteil Anwendung findet, wie dies in Figur 1 dargestellt ist. Unterhalb des Bauteils 1 ist eine Leuchtquelle 3 schematisch dargestellt, die Lichtstrahlen 4 aussendet. Die Lichtstrahlen 4 treffen auf die Rückseite des Bauteils 4 und treten im Bereich der Symbolik 2 durch den transluszenten Kunststoff hindurch, was in Figur 1 durch die Pfeile 5 symbolisiert ist.

Darüber hinaus bietet das erfindungsgemäße Verfahren auch Optionen hinsichtlich des Designs der Funktionsbauteile. So besteht beispielsweise durch Einfärben des Kunststoffmaterials (ABS bzw. ABS/PC) und Dekoration mit z.B. einem dunklen oder schwarz transluzenten Lack die Möglichkeit, mit dem Verfahren sog. Tag-Nacht Design darzustellen. Beim Tag-Design ist der Kontrast durch die z.B. schwarzen selektiv offenen Chrombereiche in der Chromumgebung gebildet; beim Nacht-Design ist eine Durchleuchtung der selektiv offenen Chrombereiche durch ein farblich eingefärbtes Substrat hindurch möglich.

Alternativ besteht durch Einfärben des Kunststoffmaterials (ABS bzw. ABS/PC) und Dekoration mit einem transparenten Lack die Möglichkeit, mit Hilfe des erfindungsgemäßen Verfahrens ein Tag-Nacht Design darzustellen, bei dem der Kontrast durch die Farbe der offenen Chrombereiche in der Chromumgebung hervorgerufen wird, welches das Tag-Design bildet. Beim Nacht-Design wird dann eine Verstärkung der Farbe durch die Beleuchtung der selektiv offenen Chrombereiche des farblich eingefärbten Substrats hindurch geschaffen.

## Patentansprüche

1. Verfahren zum Beschichten von eine Symbolik (2) aufweisenden Funktions-Bauteilen (1) aus Kunststoff, bei dem das Bauteil (1) aus einem galvanisierbaren Kunststoff im Spritzgießverfahren hergestellt wird, und anschließend galvanisiert wird, wobei die beschichteten Bereiche der Bauteile (1) galvanikfrei bleiben, **dadurch gekennzeichnet, dass** auf das Bauteil (1) eine die Symbolik (2) wiedergebende Bedruckung aufgebracht wird, die Bedruckung der Symbolik (2) auf einer Folie aus mit dem zu hinterspritzenden Material, vorzugsweise das später zu galvanisierende Kunststoffmaterial, nicht kompatiblem Material abgebildet wird und die Übertragung des auf der Trägerfolie befindlichen Druckbildes von der Folie auf das Bauteil dauerhaft im Spritzgießprozess vollzogen wird, wobei es sich bei der Folie um eine aufgerollte Endlosfolie handelt, die nach Art einer Heißprägefolie ausgebildet ist und zum Takt der Spritzgießmaschine synchronisiert schrittweise in die Spritzgießform eingezogen wird, wobei die die Symbolik (2) darstellende Lage noch während des Spritzgießvorgangs von der Folie abgelöst wird und die Symbolik (2) aus nicht galvanisierbarem und galvanostabilem Lack aufgebracht wird und mit einer Schichtdicke zwischen 1 µm und 15 µm an dem Bauteil (1) anhaftet, und dass der Haftmechanismus des übertragenden Druckes von der Folie auf das Bauteil durch ein Primer System unterstützt wird, welches durch das aufgespritzte Kunststoffmaterial aktiviert wird.

## Claims

1. Method for coating functional components (1) made of plastics material and having a symbol (2), in which the component (1) is produced from an electro-plateable plastics material in the injection-moulding process and then electroplated, wherein the coated areas of the components (1) remain free of electroplating, **characterised in that** a print reflecting the symbol (2) is applied to the component (1), the print of the symbol (2) is provided on a film of material which is not compatible with the material to be back injection moulded, preferably the plastics material to be subsequently electroplated, and the printed image located on the carrier film is permanently transferred from the film to the component in the injection-moulding process, wherein the film is a rolled-up continuous film, which is designed in the manner of a hot stamping film and is gradually drawn into the injection mould, synchronised with the cycle of the injection-moulding machine, wherein the layer representing the symbol (2) is removed from the film during the injection-moulding process and the symbol (2) of non-electroplatable and galvanostable lacquer is applied and adheres to the component (1) with a layer thickness between 1 µm and 15 µm and that the adhesion mechanism of the transferred print from the film to the component is supported by a primer system, which is activated by the injection-moulded plastics material.

## Revendications

1. Procédé permettant de revêtir des composants fonctionnels (1) en matière plastique présentant un symbole (2), au cours duquel le composant (1) est fabriqué en matière plastique galvanisable moulée par injection, puis galvanisé, sachant que les zones revêtues des composants (1) restent non galvanisées, **caractérisé en ce que** sur le composant (1) est appliquée une impression représentant le symbole (2), que l'impression du symbole (2) est reproduite sur un film en matériau non compatible avec le matériau recevant une injection dorsale, de préférence le matériau en plastique à galvaniser par la suite, et que le transfert sur le composant, de l'image d'impression présente sur le film, est réalisé de manière durable au cours du processus de moulage par injection, sachant que le film est un film sans fin enroulé, configuré à la façon d'un film gaufré à chaud, et qui en synchronisme avec la machine de moulage par injection est introduit pas à pas dans le moule de moulage par injection, sachant que la couche représentant le symbole (2) est détachée du film pendant l'opération même de moulage par injection et que le symbole (2) en laque non galvanisable et galvanostable est appliqué, et que cette couche d'une épaisseur comprise entre 1 micron et 15 microns adhère contre le composant (1), et **en ce que** le mécanisme d'adhérence de l'impression à transférer du film vers le composant est assisté par un système d'apprêt activé par la matière plastique sur laquelle il est pulvérisé.
